(19) Europäisches Patentamt
European Patent Office
Office européen des brevets

(11) **EP 2 609 649 B1**

(12) **EUROPÄISCHE PATENTSCHRIFT**

(45) Veröffentlichungstag und Bekanntmachung des Hinweises auf die Patenterteilung:
**14.10.2020 Patentblatt 2020/42**

(21) Anmeldenummer: **11754634.1**

(22) Anmeldetag: **23.08.2011**

(51) Int Cl.:
*C25B 11/03* (2006.01)     *C25B 11/04* (2006.01)
*H01M 4/86* (2006.01)     *H01M 4/92* (2006.01)
*H01M 12/06* (2006.01)

(86) Internationale Anmeldenummer:
**PCT/EP2011/064415**

(87) Internationale Veröffentlichungsnummer:
**WO 2012/025503 (01.03.2012 Gazette 2012/09)**

(54) **SAUERSTOFFVERZEHRELEKTRODE UND VERFAHREN ZU IHRER HERSTELLUNG**

OXYGEN-CONSUMING ELECTRODE AND METHOD FOR PRODUCING SAME

ÉLECTRODE CONSOMMANT DE L'OXYGÈNE ET PROCÉDÉ DE FABRICATION DE LADITE ÉLECTRODE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2010 DE 102010039846**

(43) Veröffentlichungstag der Anmeldung:
**03.07.2013 Patentblatt 2013/27**

(73) Patentinhaber: **Covestro Intellectual Property GmbH & Co. KG**
**51373 Leverkusen (DE)**

(72) Erfinder:
• **BULAN, Andreas**
**40764 Langenfeld (DE)**
• **WAGNER, Norbert**
**71065 Sindelfingen (DE)**
• **POLCYN, Gregor**
**44149 Dortmund (DE)**
• **ROSSRUCKER, Lisa**
**58300 Wetter (DE)**
• **MARX, Michael**
**63607 Wächtersbach (DE)**

(74) Vertreter: **Levpat**
**c/o Covestro AG**
**Gebäude 4825**
**51365 Leverkusen (DE)**

(56) Entgegenhaltungen:
EP-A1- 1 574 598     EP-A2- 0 115 845
EP-A2- 1 156 543     WO-A1-2008/037411
WO-A2-2005/081351     US-A1- 2003 162 074
US-A1- 2008 113 257

**Beschreibung**

Die Erfindung betrifft eine Sauerstoffverzehrelektrode, insbesondere für den Einsatz in der Chloralkali-Elektrolyse, mit einer neuartigen Katalysatorbeschichtung sowie eine Elektrolysevorrichtung. Die Erfindung betrifft ferner ein Herstellungsverfahren für die Sauerstoffverzehrelektrode sowie ihre Verwendung in der Chloralkali-Elektrolyse, der Brennstoffzellentechnik oder in Metall/Luft-Batterien.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff-Entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im Folgenden auch kurz SVE genannt - muss eine Reihe von grundsätzlichen technischen Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.-% und gegenüber reinem Sauerstoff bei einer Temperatur von typischerweise 80 - 90°C. Ebenso wird ein hohes Maß an mechanischer Stabilität gefordert, da die Elektroden in Elektrolyseuren einer Größe von üblicherweise mehr als 2 m$^2$ Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Füssigkeitsraum voneinander getrennt bleiben. Die Langzeitstabilität und geringe Herstellkosten sind weitere besondere Anforderungen an eine technisch nutzbare Sauerstoffverzehrelektrode.

Sauerstoffverzehrelektroden gemäß dem Stand der Technik werden in unterschiedlichen Anordnungen bei elektrochemischen Prozessen eingesetzt, so zum Beispiel bei der Erzeugung von Strom in Brennstoffzellen oder bei der elektrolytischen Herstellung von Chlor aus wässrigen Lösungen von Natriumchlorid. Eine nähere Beschreibung der Chlor-Alkali-Elektrolyse mit Sauerstoffverzehrelektrode befindet sich in Journal of Applied Electrochemistry, Vol 38 (9) Seite 1177 -1194 (2008). Beispiele für Elektrolysezellen mit Sauerstoffverzehrelektroden sind den Schriften EP 1033419B1, DE 19622744C1 und WO 2008006909A2 zu entnehmen.

Als Katalysator dient für die SVE-Technologie in der Regel ein Metall, eine Metallverbindung, eine nichtmetallische Verbindung oder eine Mischung von Metallverbindungen oder nichtmetallischen Verbindungen. Bekannt sind aber auch auf einen Kohlenstoffträger aufgebrachte Metalle, insbesondere Metalle der Platingruppe. Als aktivste Katalysatoren haben sich dabei Platin und Silber erwiesen (Moussallem et al "Chlor-Alkali Electrolysis with Oxygen Depolarized Cathodes: History, Present Status and Future Prospects", J. Appl. Electrochem. 38 (2008) 1177-1194). Silber ist hierbei als Rohmaterial deutlich günstiger als Platin und hat sich speziell unter den Bedingungen der Chlor-Alkali-Elektrolyse als langzeitstabil erwiesen.

Jedoch ist auch Silber in alkalischem Medium einer Desaktivierung ausgesetzt, wie in DE10130441B4 beschrieben. Zur Vermeidung dieser Korrosion, d.h. zur Erhöhung der Stabilität des Silberkatalysators wurden schon verschiedene Legierungen mit Schwermetallen eingesetzt, welche gegen Alkalilaugen beständig sind, z.B. Nickel, Wismut, Ruthenium, Platin, Palladium, Gold, Quecksilber und Kupfer, beschrieben in DE10130441B4 und EP0115845. Diese Legierungen zeigen jedoch keine erhöhte Aktivität des Katalysators, sondern dienen lediglich der Stabilisierung in alkalischen Medien. DE2021009 beschreibt einen Silber-Katalysator für die Anwendung in Brennstoffzellen mit Anteilen von Quecksilber und Kupfer, der zu einer etwas höheren Zellspannung im Vergleich zu Platin-Katalysatoren führt, jedoch eine erhöhte Langzeitstabilität aufweist.

Eine Vielzahl von weiteren Katalysatoren sind für die Eignung in Sauerstoff-Verzehrkathoden untersucht worden. In Moussallem et al "Chlor-Alkali Electrolysis with Oxygen Depolarized Cathodes: History, Present Status and Future Prospects", J. Appl. Electrochem. 38 (2008) 1177-1194 werden Palladium, Ruthenium, Gold, Nickel, Oxide und Sulfide von Übergangsmetallen und Pervoskite aufgeführt. Die genannten Katalysatoren haben sich teilweise zwar als aktiver, jedoch als im Dauerbetrieb aufgrund zu geringer Stabilität in alkalischem Medium nicht geeignet erwiesen.

Um die Aktivität von Silberkatalysatoren zu steigern, wurden in US7566388und EP 1 574 598 A1 unterschiedliche Mischungen von Metallen der Platingruppe, z.B. Silber, Platin oder Palladium mit Selten-Erdoxiden wie z.B. Ceriumoxid und Erdalkalimetallen wie z.B. Magnesium für den Einsatz in Kohlenstoffbasierten Elektroden untersucht. Messungen dieser Katalysatoren, geträgert auf Kohlenstoff, zeigen eine verbesserte Aktivität der Elektroden. Kohlenstoff ist jedoch als Trägermaterial für SVE's nicht gut geeignet, da er durch Sauerstoff oxidiert wird und damit nicht langzeitstabil ist.

In EP0149293 wird ein Elektrokatalysator für den Einsatz in Brennstoffzellen, insbesondere in Phosphorsäure-Brennstofzellen, offenbart, bei dem eine Platin/Gallium-Legierung geträgert auf Kohlenstoff als katalytisch aktive Substanz eingesetzt wird. Dieser Katalysator zeigte gegenüber reinem Platin eine erhöhte Stabilität, jedoch eine geringere Aktivität, gekennzeichnet durch eine höhere Zellspannung. Weitere Nachteile dieses Katalysators sind der Einsatz von teurem Platin und der Einsatz von Kohlenstoff als Katalysatorträger, welcher bei Einsatz als SVE oxidiert wird.

US4806515 offenbart einen Platin/Gallium-Elektrokatalysator für Brennstoffzellen, welcher eine weitere Komponente aus der Reihe, Chrom, Kobalt und Nickel oder Mischungen hiervon enthält, der sich ebenso durch eine erhöhte Langzeitstabilität gegenüber einem z.B. Platin/Cer/Kobalt-Gemisch auszeichnet. Auch hierbei handelt es sich um einen auf Kohlenstoff geträgerten Katalysator, der eine niedrigere Aktivität gegenüber dem Vergleichskatalysator aufweist.

Aus der Druckschrift WO 2005/81351 A2 sind Brennstoffzellen mit einer Membran-Elektroden-Einheit bekannt, die neben mindestens einer speziellen Polymermembran mindestens zwei Elektroden aufweist, wobei mindestens eine Elektrode einen Katalysator umfasst, enthaltend als erstes Metall mindestens ein Edelmetall aus der Platingruppe und/oder Au und/oder Ag in Kombination mit einem zweiten Metall das gemäß elektrochemischer Spannungsreihe unedler ist als das erste Metall, bevorzugt ausgewählt aus der Gruppe Fe, Co, Ni, Cr, Mn, Zr, Ti, Ga, V.

Aus der Druckschrift US 2003/0162074 A1 sind Brennstoffzellen bekannt, die ein Elektrodenpaar für den Verzehr von Sauerstoff und ein Elektrodenpaar für den Verzehr von Wasserstoff und eine der Brennstoffzelle Stabilität verleihende Elektrolytkammer und eine Kompressionsplatte aufweisen, wobei jeweils die Elektroden mit dem Elektrolyten der Elektrolytkammer in Kontakt stehen.

Die Aufgabe der vorliegenden Erfindung besteht darin, eine Sauerstoffverzehrelektrode, insbesondere für den Einsatz in der Chloralkali-Elektrolyse, bereitzustellen, die die vorstehenden Nachteile überwindet und eine höhere Aktivität des Katalysators in der SVE bei der Chloralkali-Elektrolyse ermöglicht.

Gegenstand der Erfindung, mit der die gestellte Aufgabe gelöst wird, ist eine Elektrolysevorrichtung, aufweisend eine Sauerstoffverzehrelektrode als Sauerstoff verzehrende Kathode, mindestens aufweisend einen, Träger in Form einer flächigen textilen Struktur, eine Schicht, die einen auf Silber basierenden Katalysator aufweist, eine elektrische Kontaktstelle, und eine Gasdiffusionsschicht wobei der Katalysator als katalytisch aktive Komponente zusätzlich Gallium enthält.

Es wurde überraschenderweise gefunden, dass ein Gemisch aus Silber und Gallium als aktive Komponente in einer SVE zu einer höheren Aktivität des Katalysators führt.

Bevorzugt ist eine Ausführung der neuen SVE, die dadurch gekennzeichnet ist dass die katalytisch aktive Komponente Gallium im Bereich von 0,1 bis 10 Gew.-%, bevorzugt von 1 bis 8 Gew.-%, besonders bevorzugt von 2 bis 6 Gew.-% bezogen auf das Gesamtgewicht der katalytisch aktiven Komponente enthält.

Eine weitere bevorzugt Ausführungsvariante der SVE ist dadurch gekennzeichnet, dass die Elektrode eine Gesamtbeladung an katalytisch aktiver Komponente in einem Bereich von 5 mg/cm$^2$ bis 300 mg/cm$^2$, bevorzugt von 10 mg/cm$^2$ bis 250 mg/cm$^2$ aufweist.

Die neue SVE weist bevorzugt einen Träger bestehend aus einem Werkstoff ausgewählt aus der Reihe Silber, oxidationsstabiler Kohlenstoff, Nickel, beschichtetem Nickel z.B. mit Silber beschichtetem Nickel, Nickel-Kupfer-Legierungen oder beschichteten Nickel-Kupfer-Legierungen wie versilberten Nickel-Kupfer-Legierungen auf, aus dem flächige textile Strukturen hergestellt werden.

Der elektrisch leitende Träger kann grundsätzlich ein Netz, Vlies, Schaum, Gewebe, Geflecht oder Streckmetall sein. Der Träger kann einlagig oder mehrlagig sein. Ein mehrlagiger Träger kann aus zwei oder mehreren übereinander angeordneten Netzen, Vliesen, Schäumen, Geweben, Geflechten oder Streckmetallen aufgebaut sein. Die Netze, Vliese, Schäume, Gewebe, Geflechte oder Streckmetalle können dabei unterschiedlich sein. Sie können z.B. unterschiedlich dick oder unterschiedlich porös sein oder eine unterschiedliche Maschenweite aufweisen. Zwei oder mehrere Netze, Vliese, Schäume, Gewebe, Geflechte oder Streckmetalle können z.B. durch Sintern oder Schweißen miteinander verbunden sein. Vorzugsweise wird ein Netz aus Nickel mit einem Drahtdurchmesser von 0,04 bis 0,4 mm und einer Maschenweite von 0,2 bis 1,2 mm verwendet.

Besonders bevorzugt basiert der Träger der SVE auf Nickel, Silber oder einer Kombination von Nickel und Silber.

Bevorzugt ist auch eine Form der SVE, bei der der Träger in Form eines Netzes, Gewebes, Gewirkes, Gestrickes, Vlieses, Streckmetalls oder Schaums, bevorzugt eines Gewebes vorliegt.

Zur Umsetzung der Erfindung ist auch ein Verfahren zur Herstellung der neuen Sauerstoffverzehrelektrode geeignet, das dadurch gekennzeichnet ist, dass eine Mischung aus hydrophoben Kunststoffpartikeln, insbesondere PTFE und katalytisch aktivem Material aus Silber und Nebenbestandteil Gallium hergestellt und auf einem elektrisch leitfähigen Träger in einer oder mehreren Schritten unter Herstellung von einer oder mehreren Lagen verteilt wird und unter Druck verdichtet wird.

Geeignet ist ein Verfahren zur Herstellung der neuen Sauerstoffverzehrelektrode, dass dadurch gekennzeichnet ist, dass eine Dispersion von hydrophoben Kunststoffpartikeln, insbesondere PTFE und katalytisch aktivem Material aus Silber und Nebenbestandteil Gallium in einem Dispergiermittel hergestellt und auf einen elektrisch leitfähigen Träger in einem oder mehreren Schritten unter Herstellung von einer oder mehreren Lagen gesprüht wird und das Dispergiermittel entfernt wird.

Die erfindungsgemäßen SVE können wie oben beschrieben, durch Sprüh- bzw. Dispersions- und Trockenverfahren hergestellt werden.

Die neue Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die Sauerstoffverzehrelektrode bevorzugt als Kathode in einer Brennstoffzelle geschaltet werden. Bevorzugte Beispiele für solche Brennstoffzellen sind: alkalische Brennstoffzellen.

Weiterer Gegenstand der Erfindung ist daher die Verwendung der imersten Anspruch definierten, neuen Sauerstoffverzehrelektrode zur Reduktion von Sauerstoff im Alkalischen, insbesondere in der alkalischen Brennstoffzelle, die Verwendung bei der Trinkwasseraufbereitung, beispielsweise zur Herstellung von Natriumhypochlorit oder die Verwendung in der Elektrolyse, insbesondere der Chlor-Alkali-Elektrolyse, insbesondere zur Elektrolyse von LiCl, KCl oder NaCl oder als Elektrode in einer Metall/Luft-Batterie.

Die neue SVE wird besonders bevorzugt bei der Chlor-Alkali-Elektrolyse und hier insbesondere bei der Natriumchlorid-(NaCl)-Elektrolyse eingesetzt.

Die Erfindung wird nachfolgend durch die Beispiele, welche jedoch keine Beschränkung der Erfindung darstellen, näher erläutert.

## Beispiele

Bestimmung der elektrokatalytischen Aktivität der Elektrokatalysatoren

Die Zellspannung, die sich bei einer bestimmten Stromdichte in einer Elektrolysezelle einstellt, hängt von verschiedenen Faktoren ab (Hamann, Vielstich, 2005, "Elektrochemie", S. 157 ff, Wiley-VCH).

Damit in einer Elektrolysezelle eine Reaktion abläuft, muss zunächst eine Spannung angelegt werden. Die so genannte Zersetzungsspannung kann theoretisch aus der Differenz der Redoxpotentiale ermittelt werden. Diese ergibt sich über die Nernst-Gleichung. Führt man eine Elektrolyse durch, so muss man allerdings eine höhere Spannung anlegen als sie sich aus der Nernst-Gleichung berechnet.

Durch Ohmsche Widerstände in den Elektroden, in der Elektrolytlösung und in der Membran entstehen Ohmsche Spannungsabfälle. Des Weiteren weicht bei an die Elektrolysezelle angelegter Spannung das Potential E einer Elektrode von dem Gleichgewichtspotential $E^0$ ab.

$$\eta = E - E^0 \tag{1}$$

Die Gleichung (1) definiert die Überspannung $\eta$. Diese wird z.B. durch eine kinetische Hemmung der Elektrodenreaktionen hervorgerufen.

Die Überspannung setzt sich für Redoxelektroden aus drei Anteilen zusammen; aus der Durchtrittsüberspannung $\eta_D$, der Reaktionsüberspannung $\eta_r$ und der Diffusionsüberspannung $\eta_d$. Die Reaktionsüberspannung und die Diffusionsüberspannung sind von der Konzentration der Reaktanden abhängig. Sie können daher zur Konzentrationsüberspannung zusammengefasst werden. Die Reaktionsüberspannung $\eta_r$ entsteht, wenn eine chemische Teilreaktion gehemmt ist. Hierzu gehört beispielsweise ein langsamer Adsorptions- oder Desorptionsvorgang. Durch den Stofftransport zu den Elektrodenoberflächen hin oder von den Elektrodenoberflächen weg erhält man die Diffusionsüberspannung $\eta_d$.

An der Phasengrenze zwischen Elektrode und Elektrolyt bildet sich eine elektrolytische Doppelschicht aus. Diese besteht bei der Elektrolyse im Anodenraum aus einer Schicht positiver Ladungen an der Elektrodenoberfläche sowie aus einer Schicht negativer Ladungen in der Elektrolytlösung (im Kathodenraum umgekehrt). Daher entsteht zwischen der Elektrode und der Elektrolytlösung eine elektrische Potentialdifferenz. Bei der Durchtrittsreaktion treten Ladungsträger von der einen in die andere Phase durch die elektrolytische Doppelschicht. Dabei muss eine potentialabhängige Aktivierungsenergie überwunden werden. Ist diese hoch, so wird die Durchtrittsreaktion stark gehemmt und die Geschwindigkeit der Durchtrittsreaktion ist klein. Dies lässt sich einer geringen Aktivität des Elektrokatalysators gleichsetzen.

Zur Beschreibung dieser Durchtrittsreaktion verwendet man die sogenannte Strom-Spannungs-Beziehung auch Butler-Volmer-Gleichung genannt.

An der Oberfläche einer Redoxelektrode werden sowohl Elektronen vom Metall aufgenommen als auch abgegeben. Hieraus resultiert eine anodische Teilstromdichte $i_D^+$ und eine kathodische Teilstromdichte $i_D^-$. Die gesamte durch die Doppelschicht tretende Stromdichte ergibt sich somit zu

$$i_D = i_D^+ + i_D^-$$

(2)

Über die Potentialabhängigkeit der Aktivierungsenergie lässt sich die Butler-Volmer-Gleichung herleiten. Diese beschreibt die Abhängigkeit der Gesamtstromdichte von der kathodischen und anodischen Durchtrittsüberspannung.

$$i_D = i_D^+ + i_D^- = i_0 \left[ \exp\left( \frac{\alpha z F}{RT} \cdot \eta_D \right) - \exp\left( \frac{-(1-\alpha)z F}{RT} \cdot \eta_D \right) \right]$$

(3)

Hierbei ist:
$i_D$ = Stromdichte [A/m2], $i_0$ = Austauschstromdichte [A/m2], $\alpha$ = Durchtrittsfaktor, z = Ionenwertigkeit, R = Gaskonstante [J/Kmol], $\eta_D$ = Durchtrittsüberspannung [V], F = Faradaykonstante [C/mol] und T = Temperatur [K].

Mit wachsender (positiver sowie negativer) Überspannung ergibt sich somit ein exponentieller Anstieg der Stromdichte.

Die Butler-Volmer-Gleichung kann für den Grenzfall großer Überspannungen (wie bei der Elektrolyse vorhanden) vereinfacht werden, indem die jeweilige Gegenreaktion vernachlässigt wird. Die folgenden Umformungen werden hier nur für den kathodischen Strom durchgeführt und gelten analog auch für den anodischen Strom.

$$i_D = -i_0 \exp\left( \frac{-(1-\alpha)z F}{RT} \cdot \eta_D \right)$$

(4)

Durch Logarithmieren und Auflösen nach $\eta$ erhält man

$$\eta_D = \frac{RT}{(1-\alpha)z F} \cdot 2.3 \cdot \lg i_0 - \frac{RT}{(1-\alpha)z F} \cdot 2.3 \cdot \lg |i_D|$$

$$= \frac{RT}{(1-\alpha)z F} \cdot \ln i_0 - \frac{RT}{(1-\alpha)z F} \cdot \ln |i_D|$$

(5)

Diese Gleichung lässt sich auch in halblogarithmischer Form darstellen.

$$\eta_D = A + B \cdot \lg |i_D|$$

(6)

Gleichung 6 ist die Tafel sehe Gerade, wobei B als Tafelneigung bezeichnet wird.

Für den Fall, dass im Bereich höherer Stromdichten nicht die Durchtrittsüberspannung geschwindigkeitsbestimmend ist, sondern die Durchtrittsreaktion von einer Adsorptionsreaktion überlagert wird, kann folgende Anpassung der Butler-Volmer-Gleichung verwendet werden, die einen konsekutiven Reaktionsmechanismus beschreibt.

$$i = \frac{2 i_{0,1} i_{0,2} \left[ \exp\left[ \frac{(\alpha_1 + \alpha_2) F \eta}{RT} \right] - \exp\left[ -\frac{(2 - \alpha_1 - \alpha_2) F \eta}{RT} \right] \right]}{i_{0,2} \exp\left[ \frac{\alpha_2 F \eta}{RT} \right] + i_{0,1} \exp\left[ -\frac{(1-\alpha_1) F \eta}{RT} \right]}$$

(7)

Hierbei ist:
$i_D$ = Stromdichte [A/m2], $i_0$ = Austauschstromdichte [A/m2], $\alpha$ = Durchtrittsfaktor, R = Gaskonstante [J/Kmol], $\eta$ = Durchtrittsüberspannung [V], F = Faradaykonstante [C/mol] und T = Temperatur [K].

Zur Bestimmung der Tafelneigungen und damit der Aktivität der Katalysatoren wurden galvanostatische Abschaltmessungen durchgeführt. Trägt man die hierbei ermittelten Kathodenpotentiale vs. NHE in der sogenannten Tafelauftragung auf -Auftragung der Stromdichte gegen Kathodenpotential- so kann man hieraus die Tafelneigungen bestimmen.

Die oben aufgeführte Variante der Butler-Volmer-Gleichung (Gl. 7) wurde verwendet, um die in Tabelle 1 aufgeführten Tafelneigungen I und II mit Hilfe der Solver-Funktion in Excel an die gemessenen Daten der einzelnen Elektroden in der Tafelauftragung anzupassen. Die Tafelneigung wird hierbei angegeben in mV/Dekade der Stromdichte.

Die Tafelneigung I beschreibt hierbei den linearen Bereich der Tafelauftragung im Bereich niedrigerer Stromdichten, die Tafelneigung II den linearen Bereich der Tafelauftragung im Bereich höherer Stromdichten.

Galvanostatische Abschaltmessung (Messverfahren)

Zur Bestimmung des Kathodenpotentials vs. NHE wurde in einer Elektrolysezelle Natronlauge elektrolysiert, um die Sauerstoffreduktion an der Kathode zu erhalten. Es wurde eine Elektrolysezelle mit Dreielektrodenanordnung verwendet, wobei die SVE die Zelle in Gasraum und Elektrolytraum teilt. Als Anode diente ein Platinblech. Die Elektrolysefläche betrug 3,14 cm$^2$. Als Referenzelektrode wurden zwei Hydroflex®-Elektroden der Firma Gaskatel verwendet, die über eine Haber-Luggin-Kapillare mit dem Elektrolytraum verbunden wurden. Die Versuche wurden bei einer Temperatur von 80°C, einer Natronlaugekonzentration von 32 Gew.-% und einer Sauerstoffkonzentration von 100 Vol.-% durchgeführt. Die Messung wurde 1 $\mu$s nach dem Abschaltvorgang gestartet.

Als weiteres Kriterium zum Vergleich der Elektroden wurde der ohmsche Widerstand bestimmt. Dieser lässt sich in der Form des IR-Abfalls in mVm$^2$/kA aus der Differenz des Kathodenpotentials vor und nach dem Abschalten bestimmen. Je höher der IR-Abfall desto höher ist der ohmsche Widerstand der Elektrode.

Herstellverfahren Katalysatorpulver

Das Katalysatorpulver wurde nach folgendem Verfahren hergestellt:
Silberpulver (Ag 311 Fa. Ferro) wurde in Wasser bei einer Temperatur von 80°C unter Zusatz von Natriumdodecylsulfat bis zur vollständigen Deagglomeration des Silbers in einem Dispermat mit Zahnscheibe gerührt. Nach vollständiger Deagglomeration des Silbers, wurde das thermisch verflüssigte Gallium zugegeben. Das Gemisch wurde ca. 2 h in einem Dispermat mit Zahnscheibe bei einer Temperatur von 80°C intensiv gemischt und anschließend unter Rühren auf Raumtemperatur langsam abgekühlt. Das Produkt wurde abfiltriert, intensiv gewaschen und bei 80°C 16 h getrocknet und gleichzeitig getempert. Das Material wurde anschließend über ein 63 $\mu$m Stahlsieb gesiebt.

Das beschriebene Herstellungsverfahren führt zu einem Pulver, dessen physikalischen Daten nach Analyse der Kornverteilung mittels Laser-Beugung, der spezifischen Oberfläche nach BET und der Kornform mittels Raster-Elektronen-Mikroskops mit EDX, den Standardwerten für Silberpartikel (Ag311, Fa. Ferro) entsprechen.

Herstellung der Elektrode

Für die Elektroden, welche das nach obigem Verfahren hergestellte Katalysatorpulver enthalten, wurden zwei unterschiedliche Verfahren zur Herstellung der SVE gewählt, das Trocken-Verfahren und das Sprühverfahren.

Trockenverfahren (Verfahrensbeschreibung)

Die SVE wurde wie folgt hergestellt: 3,5 kg einer Pulvermischung, bestehend aus 7 Gew.-% PTFE-Pulver, 88 Gew.-% Silber-I-Oxid und 5 Gew.-% Katalysatorpulver nach obigem Verfahren hergestellt, wurden in einer IKA-Mühle, bei einer Drehzahl von 15000 U/min so gemischt, dass die Temperatur der Pulvermischung 48 °C nicht überstieg. Dies wurde dadurch erreicht, dass der Mischvorgang unterbrochen und die Pulvermischung abgekühlt wurde. Insgesamt wurde das Mischen viermal bei einer Mischzeit von 15 Sekunden durchgeführt. Nach dem Mischen wurde die Pulvermischung mit einem Sieb mit einer Maschenweite von 1,0 mm gesiebt. Die gesiebte Pulvermischung wurde anschließend auf ein elektrisch leitfähiges Trägerelement aufgebracht. Das Trägerelement war ein Netz aus Nickel mit einer Drahtdicke von 0,14 mm und einer Maschenweite von 0,5 mm. Das Aufbringen erfolgte mit Hilfe einer 2 mm dicken Schablone, wobei das Pulver mit einem Sieb mit einer Maschenweite von 1,0 mm aufgebracht wurde. Überschüssiges Pulver, das über die Dicke der Schablone hinausragte, wurde mittels eines Abstreifers entfernt. Nach Entfernung der Schablone wird der Träger mit der aufgebrachten Pulvermischung mittels einer Walzenpresse mit einer Presskraft von 0,57 kN/cm verpresst. Der Walzenpresse wurde die Gasdiffusionselektrode entnommen.

Die so hergestellte SVE wurde vor der Messung in der Messzelle elektrochemisch reduziert.

Sprühverfahren (Verfahrensbeschreibung)

Eine wässrige Suspension bestehend aus einem Gallium-dotierten, oder reinem Silberkatalysator (Ag311) der Firma Ferro, hergestellt nach obigem Verfahren, eine PTFE-Suspension (TF5035R, 58 Gew-.%, Dyneon™), ein nicht-ionisches Tensid (Triton-X 100, Fluka Chemie AG) und Hydroxyethylmethylcellulose (Walocel MKX 70000 PP 01, Wolff Cellulosics GmbH & Co. KG) als Verdicker wurde mit verschiedenen Gehalten von Silber und PTFE hergestellt. Es wurde jeweils eine Suspension mit 97 Gew.-% Katalysatorgehalt wie folgt hergestellt. Zu 150 g der Verdickungslösung (1 Gew.-% Methylcellulose in Wasser) wurden 90 g Silberpulver, 53,7 g Wasser und 1,5 g Tensid gegeben. Nach dem Dispergieren der Suspension in einem Rotor-Stator-System (Ultra-Turrax T25 mit der Dispergiereinheit S25N-25F, IKA) bei 13500 min$^{-1}$ für 5 Minuten (mit 2 Minuten Pause zwischen jeweils 1 minütigem Dispergieren, um eine zu hohe Erwärmung der Lösung zu vermeiden) wurden 4,8 g PTFE-Suspension langsam unter Rühren zugegeben, um eine Agglomeration zu vermeiden.

Die so hergestellten Suspensionen wurden danach mehrmals auf ein Nickelnetz (Hersteller: Haver & Boecker, 106 x 118 $\mu$m Netz, 63 $\mu$m Drahtdicke) gesprüht. Die Beladung wurde so gewählt, dass 50% der Katalysator-Beladung in der Mitte, und jeweils 25% der Katalysatorbeladung auf die Elektrolytseite und die Gasseite der Elektrode aufgebracht wurde. Während des Sprühens wurde das Nickelnetz auf einer Temperatur von 100°C gehalten. Nachdem die gewünschte Gesamtbeladung von 170 g/cm$^2$ an Katalysator erreicht wurde, wurden die Elektroden zwischen zwei Metallplatten fixiert und heiß gepresst, bei einer Temperatur von 130 °C und einem Druck von 0,14 t/cm$^2$. Anschließend wurde die Elektrode in Luft mit 3 K/min erhitzt und für 15 min bei 340 °C gesintert.

**Beispiel 1: SVE mit 5 Gew.-% Ga bezogen auf Silber mittels Sprühverfahren hergestellt**

Eine SVE, welche mit 5 Gew.-% Gallium bezogen auf das Gesamtgewicht von Silber und Gallium nach dem oben beschriebenen Sprühverfahren hergestellt wurde, wurde in der Messzelle vermessen. Sie zeigt mit -57,7 mV/Dekade eine geringere Tafelneigung I als die Elektrode mit Standard-Silberkatalysator Ag311 (siehe Tab. 1) und mit -123,8 mv/Dekade nur eine geringfügig höhere Tafelneigung II. Weiterhin zeigt das Katalysatormaterial der Elektrode einen geringeren ohmschen Widerstand als der Standard-Silberkatalysator (siehe Tab. 1).

Tab. 1 Vergleich der ersten und zweiten Tafelneigung und des IR-Abfalls der verschiedenen Elektroden bei 100% Sauerstoff als Reaktionsgas.

| Elektrode | Tafelneigung I in mV/Dekade Stromdichte | Tafelneigung II in mV/Dekade Stromdichte | IR-Abfall in mVm$^2$/kA |
|---|---|---|---|
| Vergleichsbeispiel reines Silber | -61,4 | -121,1 | 10,42 |
| 5 Gew.-% Ga Sprühverfahren | -57,7 | -123,8 | 9,39 |
| 5 Gew.-% Ga Trockenverfahren | -56,3 | -97,7 | 8,96 |

**Beispiel 2: SVE mit 5 Gew.-% Ga bezogen auf Silber mittels Trockenverfahren hergestellt**

Eine SVE, welche mit 5 Gew.-% Gallium bezogen auf das Gesamtgewicht von Silber und Gallium nach dem oben beschriebenen Trockenverfahren hergestellt wurde, wurde in der Messzelle vermessen. Sie zeigt mit -56,3 mV/Dekade eine geringere Tafelneigung I als die Elektrode mit Standard-Silberkatalysator Ag311 (siehe Tab. 1) und mit -97,7 mv/Dekade eine ebenfalls geringere Tafelneigung II. Weiterhin zeigt das Katalysatormaterial der Elektrode ebenfalls einen geringeren ohmschen Widerstand als der Standard-Silberkatalysator (siehe Tab. 1).

**Beispiel 3: (Vergleichsbeispiel: SVE mit reinem Silber**

Eine SVE, welche mit dem Standard-Silberkatalysator Ag311 nach dem oben beschriebenen Sprühverfahren hergestellt wurde, wurde in der Messzelle vermessen. Sie zeigt das in Tab. 1 dargestellte Verhalten, mit einer deutlichen höheren Tafelneigung I als die Gallium-dotierten Silberkatalysatoren, einer deutlich höheren Tafelneigung II bezogen auf den mit dem Sprühverfahren hergestellten Gallium-dotierten Silberkatalysator und einem höheren ohmschen Widerstand als beim Katalysatormaterial der erfindungsgemäßen Elektroden.

**EP 2 609 649 B1**

**Patentansprüche**

1. Elektrolysevorrichtung, insbesondere für die Chloralkalielektrolyse, aufweisend eine Sauerstoffverzehrelektrode als Sauerstoff verzehrende Kathode mindestens aufweisend einen Träger in Form einer flächigen textilen Struktur, eine Schicht, die einen auf Silber basierenden Katalysator aufweist, eine elektrische Kontaktstelle, und eine Gasdiffusionsschicht, **dadurch gekennzeichnet, dass** der Katalysator als katalytisch aktive Komponente zusätzlich Gallium enthält.

2. Elektrolysevorrichtung nach Anspruch 1, **dadurch gekennzeichnet, dass** die katalytisch aktive Komponente Gallium im Bereich von 0,1 bis 10 Gew.-% bezogen auf das Gesamtgewicht der katalytisch aktiven Komponente enthält.

3. Elektrolysevorrichtung nach Anspruch 1 oder 2, **dadurch gekennzeichnet, dass** die Elektrode eine Gesamtbeladung an katalytisch aktiver Komponente in einem Bereich von 5 mg/cm$^2$ bis 300 mg/cm$^2$ aufweist.

4. Elektrolysevorrichtung nach einem der Ansprüche 1 bis 3, **dadurch gekennzeichnet, dass** der Träger aus einem oder mehreren Werkstoffen besteht, der ausgewählt ist aus der Reihe: Silber, oxidationsstabiler Kohlenstoff, Nickel, beschichtetes Nickel, Nickel-Kupfer-Legierungen oder beschichtete Nickel-Kupfer-Legierungen.

5. Elektrolysevorrichtung nach einem der Ansprüche 1 bis 4, **dadurch gekennzeichnet, dass** der Träger in Form eines Netzes, Gewebes, Gewirkes, Gestrickes, Vlieses, Streckmetalls oder Schaums vorliegt.

6. Elektrolysevorrichtung nach einem der Ansprüche 1 bis 5, **dadurch gekennzeichnet, dass** der Träger als Netz aus Nickel mit einem Drahtdurchmesser von 0,04 bis 0,4 mm und einer Maschenweite von 0,2 bis 1,2 mm ausgebildet ist.

7. Verwendung einer Sauerstoffverzehrelektrode mindestens aufweisend einen Träger in Form einer flächigen textilen Struktur, eine Schicht, die einen auf Silber basierenden Katalysator aufweist, eine elektrische Kontaktstelle, und eine Gasdiffusionsschicht, **dadurch gekennzeichnet, dass** der Katalysator als katalytisch aktive Komponente zusätzlich Gallium enthält als Sauerstoff verzehrende Kathode in der Elektrolyse.


**Claims**

1. Electrolysis apparatus, especially for chlor-alkali electrolysis, comprising an oxygen-depolarized electrode as oxygen-depolarized cathode having at least one carrier in the form of a two-dimensional textile structure, a layer including a silver-based catalyst, an electrical contact site, and a gas diffusion layer, **characterized in that** the catalyst additionally contains gallium as catalytically active component.

2. Electrolysis apparatus according to Claim 1, **characterized in that** the catalytically active component contains gallium in the range from 0.1% to 10% by weight, based on the total weight of the catalytically active component.

3. Electrolysis apparatus according to Claim 1 or 2, **characterized in that** the electrode has a total loading of catalytically active component within a range from 5 mg/cm$^2$ to 300 mg/cm$^2$.

4. Electrolysis apparatus according to any of Claims 1 to 3, **characterized in that** the carrier consists of one or more materials selected from the group of: silver, oxidation-stable carbon, nickel, coated nickel, nickel-copper alloys or coated nickel-copper alloys.

5. Electrolysis apparatus according to any of Claims 1 to 4, **characterized in that** the carrier is in the form of a mesh, weave, loop-formed knit, loop-drawn knit, nonwoven, expanded metal or foam.

6. Electrolysis apparatus according to any of Claims 1 to 5, **characterized in that** the carrier takes the form of a mesh of nickel having a wire diameter of 0.04 to 0.4 mm and a mesh size of 0.2 to 1.2 mm.

7. Use of an oxygen-depolarized electrode at least comprising a carrier in the form of a two-dimensional textile structure, a layer including a silver-based catalyst, an electrical contact site, and a gas diffusion layer, **characterized in that** the catalyst additionally contains gallium as catalytically active component, as oxygen-depolarized cathode in electrolysis.

**Revendications**

1.  Dispositif d'électrolyse, en particulier pour l'électrolyse chlore-alcali, présentant une électrode consommatrice d'oxygène en tant que cathode consommatrice d'oxygène présentant au moins un support sous la forme d'une structure textile en nappe, une couche, qui présente un catalyseur à base d'argent, un point de contact électrique, et une couche de diffusion de gaz, **caractérisé en ce que** le catalyseur contient de plus du gallium en tant que composant catalytiquement actif.

2.  Dispositif d'électrolyse selon la revendication 1, **caractérisé en ce que** le composant catalytiquement actif contient du gallium dans la plage de 0,1 à 10 % en poids par rapport au poids total du composant catalytiquement actif.

3.  Dispositif d'électrolyse selon la revendication 1 ou 2, **caractérisé en ce que** l'électrode présente une charge totale en composant catalytiquement actif dans une plage de 5 mg/cm$^2$ à 300 mg/cm$^2$.

4.  Dispositif d'électrolyse selon l'une quelconque des revendications 1 à 3, **caractérisé en ce que** le support est constitué d'un ou plusieurs matériaux, qui est choisi parmi la série : argent, carbone stable à l'oxydation, nickel, nickel revêtu, alliages nickel-cuivre ou alliages nickel-cuivre revêtus.

5.  Dispositif d'électrolyse selon l'une quelconque des revendications 1 à 4, **caractérisé en ce que** le support est présent sous forme d'un filet, d'un tissu, d'une étoffe, d'un tricot, d'un feutre, d'un métal expansé ou d'une mousse.

6.  Dispositif d'électrolyse selon l'une quelconque des revendications 1 à 5, **caractérisé en ce que** le support est formé en tant que filet de nickel doté d'un diamètre de fil de 0,04 à 0,4 mm et d'une largeur de maille de 0,2 à 1,2 mm.

7.  Utilisation d'une électrode consommatrice d'oxygène présentant au moins un support sous la forme d'une structure textile en nappe, une couche, qui présente un catalyseur à base d'argent, un point de contact électrique, et une couche de diffusion de gaz, **caractérisée en ce que** le catalyseur contient de plus du gallium en tant que composant catalytiquement actif en tant que cathode consommatrice d'oxygène dans l'électrolyse.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1033419 B1
- DE 19622744 C1
- WO 2008006909 A2
- DE 10130441 B4
- EP 0115845 A
- DE 2021009
- US 7566388 B
- EP 1574598 A1
- EP 0149293 A
- US 4806515 A
- WO 200581351 A2
- US 20030162074 A1

**In der Beschreibung aufgeführte Nicht-Patentliteratur**

- **MOUSSALLEM et al.** Chlor-Alkali Electrolysis with Oxygen Depolarized Cathodes: History, Present Status and Future Prospects. *J. Appl. Electrochem.,* 2008, vol. 38, 1177-1194
- *Journal of Applied Electrochemistry,* 2008, vol. 38 (9), 1177-1194
- **HAMANN ; VIELSTICH.** Elektrochemie. Wiley-VCH, 2005, 157 ff